# EUROPÄISCHE PATENTANMELDUNG

(11) **EP 1 188 695 A1**
(43) Veröffentlichungstag der Anmeldung: **20.03.2002**
(21) Anmeldenummer: 01122401.1
(22) Anmeldetag: 19.09.2001
(51) Int. Cl.: B65G 27/32, B65G 27/20

(54) **Regelung des Austrags einer Schwingrinne**

(30) Priorität: 19.09.2000 DE 10046464
(71) Anmelder: El Nokraschy, Hani M., Dr. Ing., 25488 Holm (DE)
(72) Erfinder: El Nokraschy, Hani M., Dr. Ing., 25488 Holm (DE)
(74) Vertreter: Köllner, Malte, Dr.

(57) **Zusammenfassung**

Für den Schüttgutaustrag einer überkritisch arbeitenden, durch Unwucht angetriebenen, freischwingenden Schwingrinne besteht ein Zusammenhang zwischen der pro Zeiteinheit von der Schwingrinne geförderten Masse (Förderleistung), der Antriebsfrequenz und der vertikalen Beschleunigung der Schwingrinne. Daher werden die Antriebsfrequenz und die vertikale Beschleunigung der Schwingrinne gemessen, woraus sich die Ist-Förderleistung ergibt. Anschließend wird die Antriebsfrequenz derart geregelt, dass sich eine vorgegebene Soll-Förderleistung ergibt. Dadurch wird eine gravimetrische Dosierung des Schüttgutaustrags einer Schwingrinne möglich.

## Beschreibung

Schwingrinnen bestehen aus einem ebenen Rinnenboden mit Seitenwänden oder aus rohrförmigen Rinnen, deren Querschnitt halbkreisförmig sein kann oder ein halbes Oval oder eine geschlossene Röhre umfassen kann, deren Querschnitt beliebig ausgebildet sein kann. Derartige Rinnen werden für den Transport von Schüttgütern verwandt. Um diese beispielsweise aus einem Vorrat oder Bunker an eine Verarbeitungsstelle zu bringen, an welcher dann das Schüttgut weiter bearbeitet wird.

Hauptsächlich in Gebrauch sind zwei Arten des Antriebs einer Schwingrinne.

Zum einen zweimassen magnetische Schwingantriebe (s. DE 41 22 286 A1), bei denen ein Magnetantrieb über Federn mit der Schwingrinne verbunden ist. Magnetische Schwingantriebe sind Feder-Masse-Systeme, die stets die Resonanz des Systems aus Magnetantrieb und Schwingrinne ausnutzen.

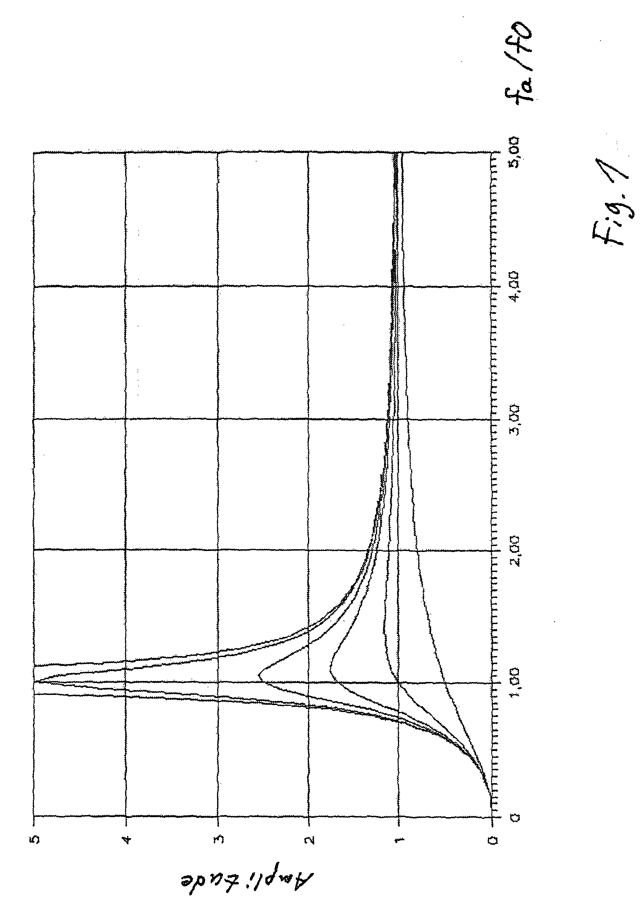

Auf der anderen Seite gibt es sogenannte Einmassen-Schwingsysteme. Bei diesen Systemen übertragen rotierende Unwuchten ihre Beschleunigungskräfte auf die Schwingrinne, die ihrerseits federnd gelagert ist, also freischwingend ist. Die federnd gelagerte Schwingrinne hat dabei eine Resonanzfrequenz f0. Die Unwuchten werden mit einer Antriebsfrequenz fa angetrieben, die sich auf die Schwingrinne überträgt. In Abhängigkeit von der Antriebsfrequenz fa wird die Resonanzkurve gemäß Fig. 1 durchlaufen, die umso flacher verläuft, je größer die Dämpfung ist. Ein Betrieb der Schwingrinne im Resonanzbereich ist umso kritischer bzw. labiler, je geringer die Dämpfung ist. Andererseits wird eine möglichst geringe Dämpfung angestrebt, um die Verlustleistung gering zu halten. Die Antriebsfrequenz fa wird daher ungleich der Resonanzfrequenz f0 gewählt.

Prinzipiell sind zwei Betriebsarten einer Schwingrinne möglich, nämlich ein überkritischer Betrieb und ein unterkritischer Betrieb.

Beim unterkritischen Betrieb ist die Eigenfrequenz f0 größer als die Antriebsfrequenz fa. Durch Erhöhung der Fördergutbelastung wird die Dämpfung erhöht und die Resonanzfrequenz verringert. Eine Erhöhung der Dämpfung führt zu einer Verringerung der Amplitude, während eine Verringerung der Resonanzfrequenz beim unterkritischen Betrieb zu einer Erhöhung der Amplitude führt. Diese beiden Effekte heben sich somit im wesentlichen gegenseitig auf, was zu einer Stabilisierung des Betriebs führt.

Beim überkritischen Betrieb ist die Eigenfrequenz f0 kleiner als die Antriebsfrequenz fa. In der Regel beträgt die Antriebsfrequenz etwa das Vierfache der Eigenfrequenz. Beim überkritischen Betrieb wird die Schwingrinne somit in einem Bereich der Resonanzkurve (siehe Fig. 1) betrieben, in dem die Amplitude nur wenig von der Antriebsfrequenz abhängt. Eine Erhöhung der Fördergutbelastung beeinflusst somit die Amplitude und damit die Förderleistung der Schwingrinne nur geringfügig.

Anstelle überkritisch arbeitender, freischwingender Schwingrinnen sind zum Transport von Fördergut auch Förderbänder, Magnetschwingrinnen oder Austragsschnecken bekannt geworden. Ebenso ist es bekannt geworden bei der Verwiegung von Schüttgut vor einer Bearbeitung Bandwaagen einzusetzen, um anschlieβend eine gewichtsdosierte Schüttgutmenge einer Weiterverarbeitung zuführen zu können, insbesondere bei Mischvorgängen und auch in der chemischen Industrie.

Das Schüttgut lagert im allgemeinen in Bunkern oder auf großen Halden, wobei im Falle der Bunker unterhalb des Bunkers beispielsweise einer der oben beschriebenen Förderer als Abzugsrinne angeordnet ist, um das in den Bunkern vorhandene Material einer weiteren Bearbeitung zuzuführen.

Wird das zu fördernde Schüttgut auf Halden gelagert, wird dieses häufig chargenweise von einem Bagger, einem Förderband, einer Bandwaage, einer Magnetschwingrinne, einer überkritisch arbeitenden freischwingenden Schwingrinne oder einer Schnecke zugeführt. Hierdurch entstehen auf den Fördereinrichtungen einzelne Schüttguthaufen, welche auch beim Weitertransport zu einer Verarbeitungsstelle nicht soweit aufgelöst werden, dass sie als kontinuierlicher Strom in die weitere Bearbeitungsstelle einfließen können.

Auch ist eine Gewichtsdosierung, beispielsweise über eine Bandwaage, nicht ohne weiteres möglich. Nur mittels zusätzlicher Einrichtungen kann der Fördergutstrom vergleichmäßigt einer Bandwaage zugeführt werden. Dies führt bei in sich verhakenden Schüttgütern, wie Schrott oder Sperrmüll, zu einem häufigen Ausfall der kompletten Anlage, wodurch zwangsläufig ein kontinuierlicher Gewichtsfluss bzw. eine kontinuierliche Gewicht sdosierung negativ beeinflusst wird.

So ist es bei der Wiederaufbereitung von Schrott und Schüttgut aus Müll bisher nicht möglich einen reibungslosen gleichmäßigen Schüttgutfluss zu ermöglichen. Dies gilt sowohl bei einer Haldenlagerung, wenn diese durch einen Bagger oder ein Becherwerk abgetragen wird, als auch bei einer Lagerung in Bunkern. Bei einer Bunkerlagerung tritt noch hinzu, dass, unabhängig von der verwendeten Fördereinrichtung, der Austrag von der Bunkerfüllung abhängig ist. Selbst bei Konstanthalten von Schwingdaten, z. B. durch Amplitudenregelung, wie bei Magnetrinnen üblich (s. z. B. DE 43 26 530 A1), wird bei einem gefüllten Bunker, zufolge Verdichtung des eingelagerten Guts durch sein Eigengewicht, der Austrag geringer sein als bei einem weitgehend entleerten Bunker.

Auch ist bekannt, dass das Gewicht eines Schüttguts, das auf einer Schwingförderrinne gefördert wird, deren Schwingdaten beeinflusst. Diese Beeinflussung ist nicht nur vom Gewicht des Schüttguts, das sich gerade auf der Schwingrinne befindet, sondern auch von einem Ankopplungsfaktor abhängig, der von der vertikalen Beschleunigung des Rinnenbodens bestimmt wird. Der Ankopplungsfaktor beschreibt, in welchem Maße die Beschleunigung des Rinnenbodens auf das Schüttgut übertragen wird. Er nimmt mit zunehmender Beschleunigung des Rinnenbodens ab. Entsprechend sinkt mit zunehmender Beschleunigung des Rinnenbodens auch der Einfluss der Masse des Schüttguts auf die Amplitude der Schwingung der Schwingrinne.

Wegen all dieser Schwierigkeiten ist bis heute kein System bekannt geworden, das einen gleichmäßigen Massestrom am Ausgang einer Schwingrinne ermöglicht, also eine gravimetrische Dosierung. Bis heute ist lediglich eine volumenmäßige Dosierung des Transports von Schüttgut durch Schwingrinnen möglich (s. DE 43 26 530 A1).

Der vorliegenden Erfindung liegt die Aufgabe zugrunde, mit einer überkritisch arbeitenden, durch Unwucht angetriebenen, freischwingenden Schwingrinne einen gewicht skonstanten Schüttgutstrom abzugeben.

Diese Aufgabe wird durch die Erfindungen gemäß den unabhängigen Ansprüchen gelöst. Vorteilhafte Weiterbildungen der Erfindungen sind in den Unteransprüchen gekennzeichnet.

Die Erfindung geht von der Erkenntnis aus, dass ein Zusammenhang besteht zwischen der pro Zeiteinheit von der Schwingrinne geförderten Masse (Förderleistung), der Antriebsfrequenz und der vertikalen Beschleunigung der Schwingrinne. Daher werden die Antriebsfrequenz und die vertikale Beschleunigung der Schwingrinne gemessen, woraus sich die Ist-Förderleistung ergibt. Anschließend wird die Antriebsfrequenz derart geregelt, dass sich eine vorgegebene Soll-Förderleistung oder ein vorgegebener Soll-Förderleistungsbereich ergibt.

Hierdurch wird erstmals ein Weg aufgezeigt, wie ohne zusätzliche Wägung, auch bei zur Verhakung neigendem Gut, eine gravimetrische Dosierung möglich wird.

Die vorgegebene Soll-Förderleistung oder der vorgegebene Soll-Förderleistungsbereich können zeitlich verändert werden. Hierdurch kann erstmals ohne Zwischenschaltung weiterer Dosier- und Wägeeinrichtungen direkt aus einem Bunker abgezogenes Schüttmaterial auf kürzestem Wege, gravimetrisch dosiert einem weiteren Prozess zugeführt werden.

Die Messung der Beschleunigung kann in zwei verschiedenen Raumrichtungen erfolgen. Dadurch lassen sich die vertikalen und horizontalen Komponenten der Beschleunigung eindeutig festlegen, was zu einer besonders genauen gravimetrischen Dosierung führt. Es ist jedoch darauf zu achten, dass die Messrichtungen nicht einen Winkel von 180 Grad einschließen.

Bei einer geneigten Schwingrinne ist es vorteilhaft, die Beschleunigung vertikal zur Förderrichtung des Schüttguts in der Schwingrinne zu messen und bei der Bestimmung der vertikalen Beschleunigung den Neigungswinkel der Schwingrinne zur Horizontalen zu berücksichtigen. Hierdurch wird auch bei geneigten freischwingenden Schwingrinnen ein eindeutiger, gravimetrisch bestimmter Schüttgutaustrag erreicht.

Um den Einfluss vom Rauschen des Signals des Sensors zur Messung der vertikalen Beschleunigung oder Stößen des Förderguts gegen die Wände der Schwingrinne auf die Regelung der Antriebsfrequenz zu eliminieren, können die gemessenen Werte der vertikalen Beschleunigung der Schwingrinne vor der Ableitung eines Signals zur Regelung der Antriebsfrequenz gefiltert werden.

Im Folgenden wird die Erfindung anhand eines Ausführungsbeispiels näher erläutert, das in den Figuren schematisch dargestellt ist. Im Einzelnen zeigt:
- Fig. 1: die Resonanzkurve einer durch Unwucht angetriebenen, freischwingenden Schwingrinne;
- Fig. 2: eine schematische Darstellung einer durch Unwucht angetriebenen, freischwingenden Schwingrinne mit zugehörigem Beschleunigungssensor und Regelkreis; und
- Fig. 3: ein Beispiel einer Regelung der Schwingrinne.

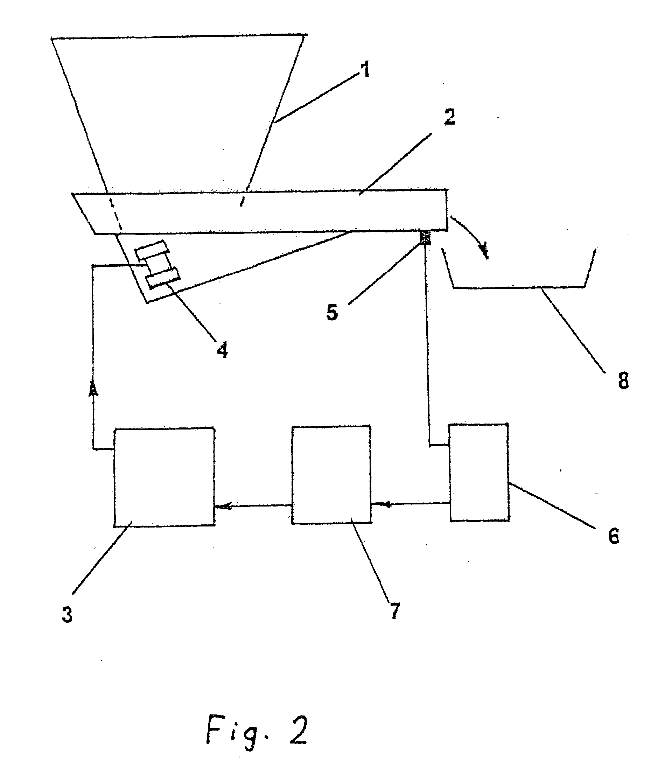

Im Folgenden wird auf Fig. 2 Bezug genommen. Aus einem stationären Bunker bzw. Aufnahmetrichter 1 wird einer überkritisch arbeitenden freischwingenden Schwingrinne 2 Schüttgut zugeführt. Die Schwingrinne 2 kann, wie dargestellt, horizontal verlaufen oder auch unter einem positiven oder negativen vorgegebenen Neigungswinkel zur Horizontalen angeordnet sein. Eine Unwucht 4, welche mit der freischwingenden Schwingrinne 2 verbunden ist, wird von einem Frequenzumrichter 3 beaufschlagt.

Im Auslaufbereich der Schwingrinne 2 ist ein Sensor 5 zur nachfolgenden Bestimmung der Beschleunigung angeordnet. Als Sensoren hierfür sind Beschleunigungsmesser, Geschwindigkeitsmesser oder Wegmesser allein oder in Kombination verwendbar. Der Sensor 5 ist mit einer Auswerte- und Versorgungseinrichtung 6 verbunden. Die elektrischen Ausgangssignale des Sensors 5 werden über die Auswerte- und Versorgungseinrichtung 6 einer Recheneinheit 7 zugeführt, in welcher die augenblickliche Förderleistung berechnet wird, und welche eine Nachsteuerung der Antriebsfrequenz der Schwingrinne über den Frequenzumrichter 3 ermöglicht, womit ein vorgegebener gravimetrisch bestimmter Austrag in eine weitere Bearbeitungsstation 8 ermöglicht wird.

Aus Anlass der Ortsgegebenheiten können anstelle einer Schwingförderrinne 2 zwei hintereinander betriebene Schwingrinnen verwendet werden, wobei die zweite Schwingrinne anstelle der Bearbeitungsstation 8 tritt, und wobei durch die Schwingrinne 2 aus dem Bunker das Fördergut abgezogen wird. Dies hat den Vorteil, dass die Rinne 2 das Gutgewicht im Bunker trägt, und die anstelle der Bearbeitungsstation 8 getretene zweite Rinne mit dem Sensor 5 im Bereich ihres Auslaufs versehen wird, und somit nur vom Gutgewicht auf der anstelle der Bearbeitungsstation getretenen Rinne beeinflusst wird. Der Frequenzumsetzer 3 hingegen wirkt auf die Unwuchtantriebe beider Rinnen.

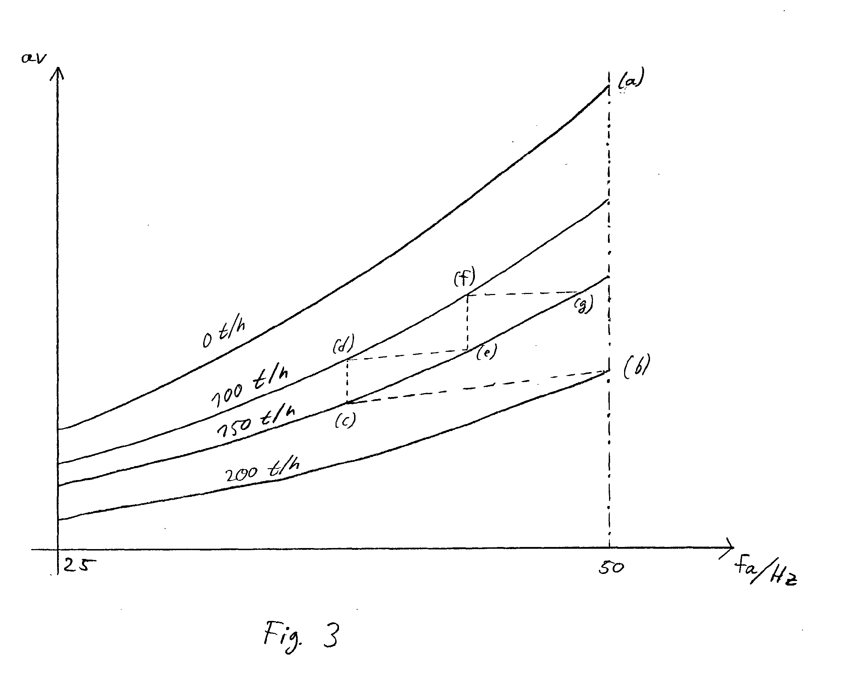

Im Folgenden wird auf Fig. 3 Bezug genommen. Fig. 3 zeigt die vertikale Beschleunigung (av) für verschiedene Förderleistungen (100 t/h, 150 t/h, ...) als Funktion der Antriebsfrequenz (fa). Gezeigt ist ein Frequenzbereich zwischen 25 und 50 Hz. 50 Hz stellt in der Regel die Obergrenze der Antriebsfrequenz dar. Die Kurven können auf empirischem oder theoretischem Wege ermittelt werden.

Die Leerlaufkurve (0 t/h) ist im Wesentlichen eine Parabel, da die Beschleunigung proportional zum Quadrat der Frequenz ist. Mit zunehmender Förderleistung bzw. Massenbelegung der Schwingrinne nimmt die vertikale Beschleunigung ab. Dies zeigt sich in dem Verlauf der zu den einzelnen Förderleistungen gehörenden Kurven.

Im Folgenden sei ein Beispiel für die Regelung der gravimetrischen Dosierung der Förderleistung anhand von Fig. 3 skizziert.

Am Punkt (a) der Fig. 3 befindet sich die Schwingrinne im Leerlauf. Die Antriebsfrequenz beträgt 50 Hz. Anschließend wird die Schwingrinne mit Masse beaufschlagt. Bei der Antriebsfrequenz von 50 Hz möge sich eine vertikale Beschleunigung entsprechend einer Förderleistung von 200 t/h ergeben (b). Wird eine Förderleistung zwischen 100 und 150 t/h gewünscht, so wird die Antriebsfrequenz solange gesenkt, bis sich die gewünschte vertikale Beschleunigung entsprechend einer Förderleistung von 150 t/h ergibt (c). Die von der Schwingrinne durchlaufene Kurve ist gestrichelt in Fig. 3 eingezeichnet. Wird die Schwingrinne eine Weile bei der zu (c) gehörigen Antriebsfrequenz betrieben, so wird ein Teil der auf der Schwingrinne befindlichen Masse ausgetragen. Dadurch verringert sich schrittweise die auf der Schwingrinne befindliche Masse, und die vertikale Beschleunigung der Schwingrinne nimmt zu (d). Nach einer Weile erreicht die Schwingrinne die Kurve, die zu einer Förderleistung von 100 t/h gehört. Damit die Förderleistung im gewünschten Regelbereich zwischen 100 und 150 t/h bleibt, muss die Antriebsfrequenz wieder erhöht werden (e). Sie wird so weit erhöht, bis sich ein Austrag von 150 t/h ergibt. Die sich ergibt. Die sich ergebende Antriebsfrequenz wird wiederum solange konstant gehalten, bis die Förderleistung unter die Untergrenze des Regelungsbereichs, d. h. unter 100 t/h, zu sinken droht (f). Daraufhin wird wiederum die Antriebsfrequenz erhöht (g).

Die Regelung kann in der angegebenen Weise fortgesetzt werden, bis die Schwingrinne vollständig entleert ist.

### Bezugszeichenliste

- 1: Bunker
- 2: Schwingrinne
- 3: Frequenzumrichter
- 4: Unwicht
- 5: Beschleunigungssensor
- 6: Auswerte- und Versorgungseinrichtung
- 7: Recheneinheit
- 8: Bearbeitungsstation

## Patentansprüche

1. Verfahren zur Regelung des Schüttgutaustrags einer überkritisch arbeitenden, durch Unwucht (4) angetriebenen, freischwingenden Schwingrinne (2), mit folgenden Schritten:
a) Der Zusammenhang zwischen der pro Zeiteinheit von der Schwingrinne geförderten Masse (Förderleistung), der Antriebsfrequenz und der vertikalen Beschleunigung der Schwingrinne wird bestimmt.
b) Die Antriebsfrequenz und die vertikale Beschleunigung der Schwingrinne werden gemessen, woraus sich die Ist-Förderleistung ergibt.
c) Die Antriebsfrequenz wird derart geregelt, dass sich eine vorgegebene Soll-Förderleistung oder ein vorgegebener Soll-Förderleistungsbereich ergibt.

2. Verfahren nach dem vorhergehenden Anspruch, **dadurch gekennzeichnet, dass** die vorgegebene Soll-Förderleistung oder der vorgegebene Soll-Förderleistungsbereich zeitlich verändert werden.

3. Verfahren nach einem der vorhergehenden Ansprüche, **dadurch gekennzeichnet, dass** die Beschleunigung in zwei verschiedenen Raumrichtungen gemessen wird.

4. Verfahren nach einem der vorhergehenden Ansprüche, **dadurch gekennzeichnet,**
**dass** bei einer geneigten Schwingrinne die Beschleunigung vertikal zur Förderrichtung des Schüttguts in der Schwingrinne (2) gemessen wird, und
**dass** der Neigungswinkel der Schwingrinne (2) zur Horizontalen bei der Bestimmung der vertikalen Beschleunigung berücksichtigt wird.

5. Verfahren nach einem der vorhergehenden Ansprüche, **dadurch gekennzeichnet, dass** die gemessenen Werte der vertikalen Beschleunigung der Schwingrinne vor der Ableitung eines Signals zur Regelung der Antriebsfrequenz gefiltert werden.

6. Überkritisch arbeitende, durch Unwucht angetriebene, freischwingende Schwingrinne
d) mit Mitteln (5) zum Messen der Antriebsfrequenz und der vertikalen Beschleunigung der Schwingrinne,
e) mit Mitteln (7) zum Berechnen der pro Zeiteinheit von der Schwingrinne geförderten Masse (Förderleistung) als Funktion der Antriebsfrequenz und der vertikalen Beschleunigung der Schwingrinne, und
f) mit Mitteln (7) zum Regeln der Antriebsfrequenz in der Weise, dass sich eine vorgegebene Soll-Förderleistung oder ein vorgegebener Soll-Förderleistungsbereich ergibt.
